# FASCICULE DE BREVET EUROPEEN

(11) **EP 2 047 229 B1**
(45) Date de publication et mention de la délivrance du brevet: **11.10.2017**
(21) Numéro de dépôt: 07803778.5
(22) Date de dépôt: 26.06.2007
(51) Int. Cl.: G01N 1/28, B01L 3/00

(54) **SYSTÈME DE DÉPOT DE CELLULES**
SYSTEM ZUR ZELLABSCHEIDUNG
CELL DEPOSITION SYSTEM

(30) Priorité: 31.07.2006 FR 0607005
(43) Date de publication de la demande: 15.04.2009
(73) Titulaire: NOVACYT, 78140 Velizy Villacoublay (FR)
(72) Inventeur: PELTIER, Eric, 92140 Clamart (FR)
(74) Mandataire: Lavoix
(86) Numéro de dépôt international: PCT/FR2007/001066
(87) Numéro de publication internationale: WO 2008/015321

(56) Documents cités:
- EP-A- 1 045 249
- DE-A1- 3 936 093
- DE-U1- 8 416 418
- FR-A- 2 869 413
- US-A- 5 318 749

## Description

La présente invention concerne un système de dépôt de cellules sur une plaque d'analyse.

Pour le dépistage ou le diagnostic des lésions, on réalise des prélèvements cellulaires qui sont mis en suspension en vue de leur analyse.

De façon générale, ces prélèvements peuvent être réalisés à l'aide de brosses spécifiques, d'aiguilles ou de tout autre moyen adapté et sont ensuite introduites dans un flacon contenant un fixateur cellulaire afin que les cellules prélevées soient fixées par le fixateur et forment avec celui-ci une suspension.

Les cellules doivent ensuite être déposées sur une plaque d'analyse.

On connaît déjà dans l'état de la technique, différents procédés et systèmes de dépôt pour ce type d'applications.

C'est ainsi par exemple que des moyens de centrifugation et de filtrage ont été mis en oeuvre pour obtenir ce dépôt de cellules sur la plaque.

Cependant, de tels moyens sont relativement complexes, encombrants, coûteux et d'une utilisation peu commode.

Le document US 5 318 749 décrit un système de dépôt par centrifugation comprenant une chambre de dépôt placée au-dessus d'une plaque d'analyse. La chambre est mobile entre une première position en appui contre la plaque d'analyse pour permettre un dépôt des cellules pendant une étape de centrifugation et une seconde position éloignée de la plaque d'analyse pour permettre l'absorption du fluide restant par un matériau d'absorption entourant la chambre.

Le dépôt des cellules peut également être obtenu par une simple décantation.

Dans ce cas, la suspension cellulaire comprenant le fixateur cellulaire et les cellules, est versée dans une chambre de réception placée au-dessus de la plaque d'analyse et dont le fond est ouvert et s'étend en regard d'une zone de dépôt de cellules de la plaque d'analyse.

Les cellules se déposent alors progressivement sur la plaque, puis le fixateur est retiré de la chambre.

On conçoit cependant que cette opération qui consiste à enlever le fixateur sans déplacer les cellules est très longue et délicate.

Pour résoudre ces problèmes, le document FR-A- 2 792 333 propose un système de dépôt de cellules sur une plaque d'analyse, lesdites cellules étant contenues dans une suspension cellulaire comprenant un fixateur cellulaire et lesdites cellules, ladite suspension étant versée dans une chambre de réception placée au-dessus de la plaque d'analyse, et dont le fond est ouvert et s'étend en regard d'une zone de dépôt de cellules de la plaque d'analyse. Selon ce système, le fond de la chambre est en communication fluidique avec un matériau d'absorption du fixateur afin d'absorber progressivement celui-ci et permettre un dépôt homogène des cellules sur la zone de dépôt de cellules de la plaque d'analyse.

Cependant, à l'usage, un tel système a également présenté un certain nombre d'inconvénients, notamment au niveau du temps requis pour assurer l'absorption du fixateur et donc le dépôt des cellules sur la plaque d'analyse.

Le but de l'invention est donc de résoudre ces problèmes.

A cet effet, l'invention a pour objet un procédé de dépôt de cellules sur une plaque d'analyse, lesdites cellules étant contenues dans une suspension cellulaire comprenant un fixateur et lesdites cellules, comportant la fourniture d'un système comprenant une chambre de réception de la suspension placée au-dessus de la plaque d'analyse, et dont le fond est ouvert et s'étend en regard d'une zone de dépôt de cellules de la plaque et un matériau d'absorption du fixateur placé autour de la chambre et de la zone de dépôt de la plaque, caractérisé en ce que le procédé comprend les étapes suivantes : placer la chambre dans une première position en appui contre la plaque d'analyse, pour permettre un dépôt par décantation des cellules sur la zone de dépôt de la plaque, et déplacer la chambre dans une seconde position éloignée de cette plaque d'analyse pour mettre la chambre en relation fluidique avec le matériau d'absorption pour permettre l'absorption du fixateur par ce matériau.

Suivant des modes particuliers de réalisation, le procédé comporte une ou plusieurs des caractéristiques suivantes :
- le fond de la chambre est muni de moyens d'étanchéité ;
- la chambre est reliée à des moyens de déplacement de celle-ci entre ses deux positions au bout d'une période de temps prédéterminée ;
- la période de temps prédéterminée est égale à environ 30 minutes ; et
- le matériau d'absorption se présente sous la forme d'une feuille de papier buvard placée autour de la zone de dépôt de la plaque et de la chambre.

L'invention sera mieux comprise à la lecture de la description qui va suivre, donnée uniquement à titre d'exemple et faite en se référant aux dessins annexés, sur lesquels :
- la figure 1 représente une vue schématique en coupe d'un système de dépôt selon l'invention, dans laquelle la chambre est dans sa première position ; et
- la figure 2 représente une vue analogue, dans laquelle la chambre est dans sa seconde position.

On a en effet représenté sur ces figures, un système de dépôt de cellules sur une plaque d'analyse.

La plaque d'analyse est désignée par la référence générale 1 et est formée par toute plaque appropriée déjà connue dans l'état de la technique.

Cette plaque est reçue dans une empreinte correspondante 2 d'une pièce 3 formant socle, qui sera décrite plus en détail par la suite.

Une suspension cellulaire, désignée par la référence générale 4 est versée dans une chambre de réception 5, placée au-dessus de la plaque d'analyse et dont le fond est ouvert et s'étend en regard d'une zone de dépôt de cellules de la plaque d'analyse.

Cette chambre de réception 5 est par exemple placée dans une pièce de support 6 qui sera décrite plus en détail par la suite, et qui s'étend en regard de la pièce formant socle 3.

Le système de dépôt comporte également un matériau d'absorption du fixateur cellulaire.

Ce matériau d'absorption est désigné par la référence générale 7 sur ces figures et se présente par exemple sous la forme d'une feuille de papier buvard de l'épaisseur du dépôt liquidien (environ 0,5 mm), munie d'un trou 8 adapté pour s'étendre en regard de la zone de dépôt de cellules de la plaque d'analyse.

Le matériau d'absorption s'étend alors autour de la zone de dépôt de cellules de la plaque et de la chambre de réception 5, et est donc placé entre les pièces formant socle 3 et de support 6 autour de cette chambre de réception 5 de la suspension.

Ces pièces formant socle et support peuvent être fixées et serrées l'une sur l'autre par l'intermédiaire par exemple de moyens de fixation et de serrage permettant de maintenir la feuille de matériau d'absorption en position, par serrage entre celles-ci.

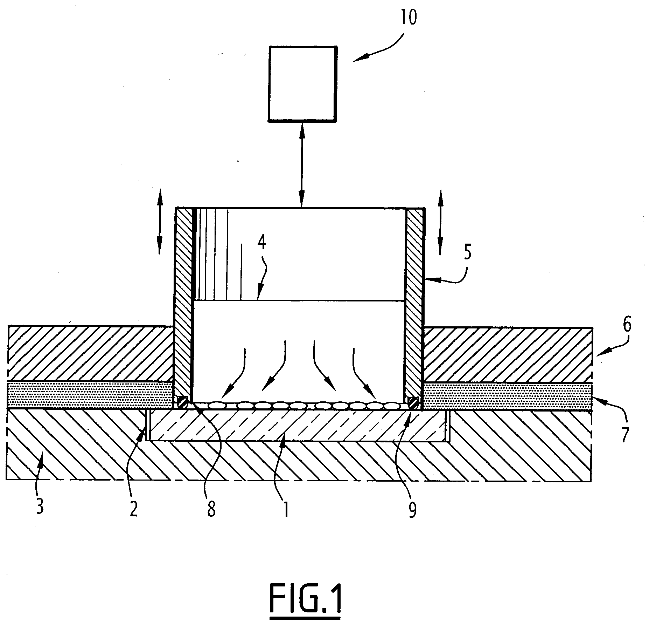

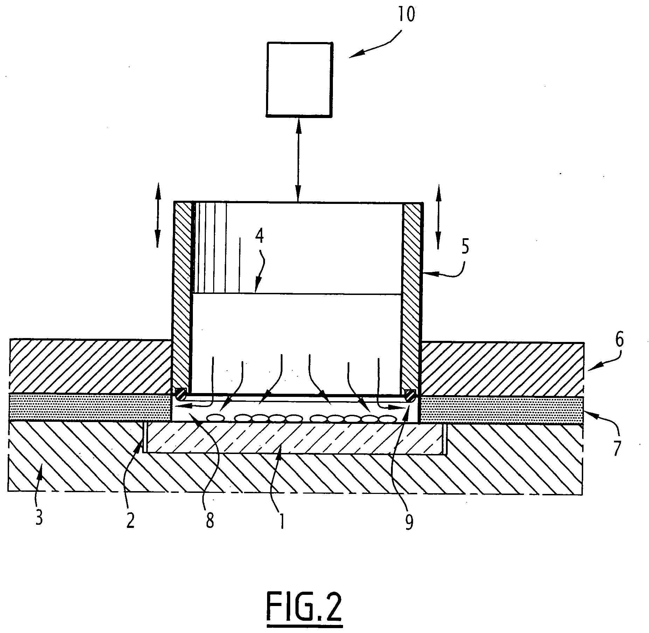

On notera également que le bord inférieur de la chambre 5 peut être muni par exemple d'un joint d'étanchéité 9 tel que par exemple un joint torique et que la chambre est déplaçable par rapport à cette plaque, comme cela est illustré sur ces figures 1 et 2, par l'intermédiaire de moyens de commande de son déplacement, désignés par la référence générale 10.

Ces moyens de commande peuvent présenter n'importe quelle structure appropriée.

Ces moyens permettent alors de déplacer cette chambre entre la position illustrée sur la figure 1, dans laquelle la chambre et plus particulièrement le fond de celle-ci et le joint d'étanchéité sont en appui contre la plaque d'analyse, empêchant ainsi le matériau d'absorption d'absorber le fixateur cellulaire de la suspension contenue dans la chambre.

La chambre est alors maintenue dans cette position pendant une période de temps prédéterminée par exemple égale à environ 30 minutes pour permettre un dépôt homogène par décantation de cellules sur la plaque d'analyse, comme cela est illustré.

Au bout de cette période de temps prédéterminée, les moyens de commande provoquent un déplacement de la chambre de la position illustrée sur la figure 1 vers la position illustrée sur la figure 2, dans laquelle cette chambre est éloignée de la plaque d'analyse, mettant ainsi en relation fluidique le fixateur de la suspension cellulaire et le matériau d'absorption.

Des tests ont en effet montré qu'à partir de 30 minutes, les cellules sont déjà bien en place et il est alors possible de déclencher l'absorption du fixateur pour gagner du temps sur l'opération de dépôt de ces cellules sur la plaque d'analyse.

Il va de soi bien entendu que différents modes de réalisation de ce système peuvent être envisagés, notamment au niveau des moyens de déplacement et des moyens d'étanchéité de la chambre.

On conçoit alors que cette structure permet d'obtenir rapidement un dépôt homogène des cellules sur la plaque d'analyse, notamment sous forme de monocouche, ce qui facilite l'analyse ultérieure de celles-ci et que cette structure est particulièrement bien adaptée à l'analyse de suspensions cytologiques.

## Revendications

1. Procédé de dépôt de cellules sur une plaque d'analyse (1), lesdites cellules étant contenues dans une suspension cellulaire (4) comprenant un fixateur et lesdites cellules, comportant l'étape de :
- fourniture d'un système comprenant une chambre de réception (5) de la suspension placée au-dessus de la plaque d'analyse (1), et dont le fond est ouvert et s'étend en regard d'une zone de dépôt de cellules de la plaque et un matériau d'absorption (7) du fixateur placé autour de la chambre et de la zone de dépôt de la plaque,
**caractérisé en ce que** la méthode comprend les étapes suivantes :
- placer la chambre (5) dans une première position (Fig.1) en appui contre la plaque d'analyse (1) pour permettre un dépôt par décantation des cellules sur la zone de dépôt de la plaque (1), et
- déplacer la chambre (5) dans une seconde position (Fig.2) éloignée de cette plaque d'analyse (1), pour mettre la chambre (5) en relation fluidique avec le matériau d'absorption (7) pour permettre l'absorption du fixateur par ce matériau.

2. Procédé selon la revendication 1, **caractérisé en ce que** le fond de la chambre (5) est muni de moyens d'étanchéité (9).

3. Procédé selon la revendication 1 ou 2, **caractérisé en ce que** la chambre (5) est reliée à des moyens (10) de déplacement de celle-ci entre ses deux positions au bout d'une période de temps prédéterminée.

4. Procédé selon la revendication 3, **caractérisé en ce que** la période de temps prédéterminée est égale à environ 30 minutes.

5. Procédé selon l'une quelconques des revendications précédentes, **caractérisé en ce que** le matériau d'absorption (7) se présente sous la forme d'une feuille de papier buvard placée autour de la zone de dépôt de la plaque et de la chambre (5).

## Patentansprüche

1. Verfahren zum Absetzen von Zellen auf einer Analyseplatte (1), wobei die Zellen in einer Zellsuspension (4) enthalten sind, die ein Fixiermittel und die Zellen aufweist, aufweisend den Schritt:
- Bereitstellen eines Systems, das aufweist eine Kammer zur Aufnahme (5) der Suspension, die über der Analyseplatte (1) positioniert ist und deren Boden offen ist und sich gegenüberliegend einer Zellen-Absetzzone der Platte erstreckt, und ein Material zur Absorption (7) des Fixiermittels, das um die Kammer und die Absetzzone herum positioniert ist,
**dadurch gekennzeichnet, dass** das Verfahren folgende Schritte aufweist:
- Platzieren der Kammer (5) in einer ersten Position (Fig. 1) in Auflage gegen die Analyseplatte (1), um ein Absetzen der Zellen auf der Absetzzone der Platte (1) durch Dekantieren zu erlauben, und
- Verlagern der Kammer (5) in eine zweite Position (Fig. 2), die von dieser Analyseplatte (1) entfernt ist, um die Kammer (5) mit dem Absorptions-Material (7) in Fluidverbindung zu bringen, um die Absorption des Fixiermittels durch dieses Material zu erlauben.

2. Verfahren gemäß Anspruch 1, **dadurch gekennzeichnet, dass** der Boden der Kammer (5) mit Abdichtungsmitteln (9) versehen ist.

3. Verfahren gemäß Anspruch 1 oder 2, **dadurch gekennzeichnet, dass** die Kammer (5) im Zusammenhang steht mit Mitteln (10) zur Verlagerung von ihr zwischen ihren beiden Positionen nach einer vorbestimmten Zeitspanne.

4. Verfahren gemäß Anspruch 3, **dadurch gekennzeichnet, dass** die vorbestimmte Zeitspanne etwa 30 Minuten beträgt.

5. Verfahren gemäß irgendeinem der vorhergehenden Ansprüche, **dadurch gekennzeichnet, dass** das Absorptions-Material (7) in Form einer Folie von Löschpapier ist, die um die Absetzzone der Platte und die Kammer (5) herum platziert ist.

## Claims

1. Process for depositing cells on an analysis plate (1), the cells being contained in a cell suspension (4) comprising a fixing agent and the cells, comprising the step of:
furnishing a system comprising a chamber (5), for receiving the suspension, which is positioned above the analysis plate (1) and whose base is open and extends opposite a cell depositing zone of the plate and a material (7) for absorbing the fixing agent placed around the chamber and the depositing zone of the plate,
**characterised in that** the process comprises the following steps:
- placing the chamber (5) in a first position (Figure 1) in abutment against the analysis plate (1) in order to allow the cells to be deposited on the depositing zone of the plate (1) by means of decantation, and
- moving the chamber (5) in a second position (Figure 2) remote from this analysis plate (1) in order to place the chamber (5) in a fluid relationship with the absorption material (7) in order to allow this material to absorb the fixing agent.

2. Process according to claim 1, **characterised in that** the base of the chamber (5) is provided with sealing means (9).

3. Process according to claim 1 or 2, **characterised in that** the chamber (5) is connected to means (10) for moving the chamber between its two positions at the end of a predetermined period of time.

4. Process according to claim 3, **characterised in that** the predetermined period of time is approximately 30 minutes.

5. Process according to any one of the preceding claims, **characterised in that** the absorption material (7) is in the form of a sheet of absorbent paper which is placed around the depositing zone of the plate and the chamber (5).
